# EUROPEAN PATENT APPLICATION

(11) **EP 4 722 420 A1**
(43) Date of publication of application: **08.04.2026**
(21) Application number: 23938264.1
(22) Date of filing: 07.12.2023
(51) Int. Cl.: C25D 3/38, C25D 3/40, C25D 15/00

(54) **COMPOUND DISPERSANT, COMPOUND DISPERSANT SOLUTION, AND COMPOSITE PLATING SOLUTION**

(30) Priority: 25.05.2023 CN 202310610776
(71) Applicant: Zhejiang Chint Electrics Co., Ltd., Wenzhou, Zhejiang 325603 (CN)
(72) Inventor: XU, Zhengli, Wenzhou, Zhejiang 325602 (CN); SHEN, Qi, Wenzhou, Zhejiang 325602 (CN); LI, Tongyang, Wenzhou, Zhejiang 325602 (CN); ZHAO, Wei, Wenzhou, Zhejiang 325602 (CN)
(74) Representative: Berggren Oy
(86) International application number: PCT/CN2023/137055
(87) International publication number: WO 2024/239597

(57) **Abstract**

The present application discloses a compound type dispersant, a compound type dispersant solution, and a composite plating solution, where the compound type dispersant includes an alkyl sulfonate and a formaldehyde condensate. The compound type dispersant described in the present application has excellent dispersing properties, and when used in a composite plating solution, the graphene can be fully evenly distributed in a dispersed solution system.

## Description

The present application claims priority to Chinese patent application No. 202310610776.4 filed with Chinese Patent Office on May 25, 2023, entitled with "COMPOUND TYPE DISPERSANT, COMPOUND TYPE DISPERSANT SOLUTION, COMPOSITE PLATING SOLUTION AND PREPARATION METHOD", the entire contents of which are incorporated by reference into the present application.

### TECHNICAL FIELD

The present application relates to the field of electroplating technology, and in particular to a compound type dispersant, a compound type dispersant solution, and a composite plating solution.

### BACKGROUND ART

A graphene is a two-dimensional crystalline material with excellent electrical, thermal and mechanical properties. The single-layer graphene has a thermal conductivity as high as 5150W/(m·K), and a carrier mobility of 15000 cm²/(V·S). These excellent properties enable the coating prepared using the metal-based-graphene electroplating solution to have excellent electrical conductivity, thermal conductivity, wear resistance and so on. In addition, the graphene has good stability, so there is no problem of dielectric corrosion in the metal based-graphene electroplating solution.

However, there is a strong π-π force between graphene sheet layers, which makes it prone for the single-layer graphene dispersed in the dispersion to agglomerate to form graphite, thus seriously affecting the properties of the electroplating solution such as conductivity, thermal conductivity and wear resistance. In order to overcome the problem of graphene agglomeration in the electroplating solution, the existing metal based-graphene electroplating solution uses a surfactant, a penetrant etc. to enhance the dispersion of the graphene, but it is still difficult to fully destroy the π-π force between the graphene layers, and the dispersion effect of graphene in the electroplating solution is still poor.

Therefore, there is an urgent need for a dispersant that can effectively slow down or even block agglomeration of the graphene to enhance the dispersibility of graphene in the metal based-graphene electroplating solution.

### TECHNICAL SOLUTION

In view of the above, the present application provides a compound type dispersant for a composite plating solution, aiming to remedy the problem of easy agglomeration of the graphene in the existing composite plating solution.

The embodiments of the present application are implemented as follows: a compound type dispersant includes an alkyl sulfonate and a formaldehyde condensate, a mass ratio of the alkyl sulfonate to the formaldehyde condensate is (0.8~10):1.

Optionally, in some embodiments, the alkyl sulfonate includes one or more of sodium dodecyl sulfonate, sodium diheptyl sulfosuccinate, sodium dihexyl sulfosuccinate, sodium methylene naphthalene disulfonate, polystyrene sulfonate, alkyl naphthalene sulfonate and alkyl benzene sulfonate.

Optionally, in some embodiments, the polystyrene sulfonate comprises sodium polystyrene sulfonate; and/or
The alkylnaphthalene sulfonate comprises sodium alkylnaphthalene sulfonate; and/or
The alkylbenzene sulfonate includes one or more of sodium alkylbenzene sulfonate and calcium alkylbenzene sulfonate.

Optionally, in some embodiments, the formaldehyde condensate includes one or more of naphthoquinone sulfonate formaldehyde condensate, sodium methylnaphthalene sulfonate formaldehyde condensate, sodium naphthalene sulfonate formaldehyde condensate, sodium cresol sulfonate formaldehyde condensate, formaldehyde condensate of benzaldehyde and polyethylene glycol, melamine-formaldehyde condensate and formaldehyde-2-naphthalenesulfonic acid condensate.

Correspondingly, an embodiment of the present application further provides a compound type dispersant solution, comprising water and the above-mentioned compound type dispersant.

Optionally, in some embodiments, in the compound type dispersant solution, a mass concentration of the compound type dispersant is 10~20%.

Correspondingly, an embodiment of the present application further provides a composite plating solution, the composite plating solution includes a copper salt, a graphene, a conductive salt, a complexing agent, water and the above-mentioned compound type dispersant solution.

Optionally, in some embodiments, the copper salt includes cuprous cyanide; and/or
The conductive salt includes one or more of potassium hydroxide and sodium hydroxide; and/or
The complexing agent includes one or more of potassium cyanide and sodium cyanide.

Optionally, in some embodiments, in the composite plating solution, a concentration of the copper salt is 50~70 g/L; and/or
In the composite plating solution, a concentration of the graphene is 0.5~5 g/L; and/or
In the composite plating solution, a concentration of the conductive salt is 10~20 g/L; and/or
In the composite plating solution, a concentration of the complexing agent is 100~120 g/L; and/or
In the composite plating solution, a concentration of the compound type dispersant solution is 25~50 g/L.

Optionally, in some embodiments, the composite plating solution further includes one or more of an anode activator and an auxiliary additive.

Optionally, in some embodiments, the anode activator includes one or more of potassium sodium tartrate, sodium tartrate and potassium tartrate; and /or
The auxiliary additive includes potassium thiocyanate; and/or
In the composite plating solution, a concentration of the anode activator is 15~30 g/L; and/or
In the composite plating solution, a concentration of the auxiliary additive is 10~20 g/L.

### BENEFICIAL EFFECT

The compound type dispersant described in the present application has excellent dispersing properties. When used in the composite plating solution, it can allow the graphene to be fully and evenly dispersed in the solution system. In this way, the graphene in the composite plating solution including the compound type dispersant may have good dispersibility. When the composite plating solution is used to prepare a coating, the graphene can be evenly dispersed in the coating, so that the coating has good thermal conductivity, electrical conductivity, stability and wear resistance.

### DESCRIPTION OF THE DRAWINGS

In order to more clearly illustrate the technical solutions in the embodiments of the present application, the drawings required for use in the description of the embodiments will be briefly introduced below. Obviously, the drawings described below are only some embodiments of the present application. For those skilled in the art, other drawings can be obtained based on these drawings without making any creative work.

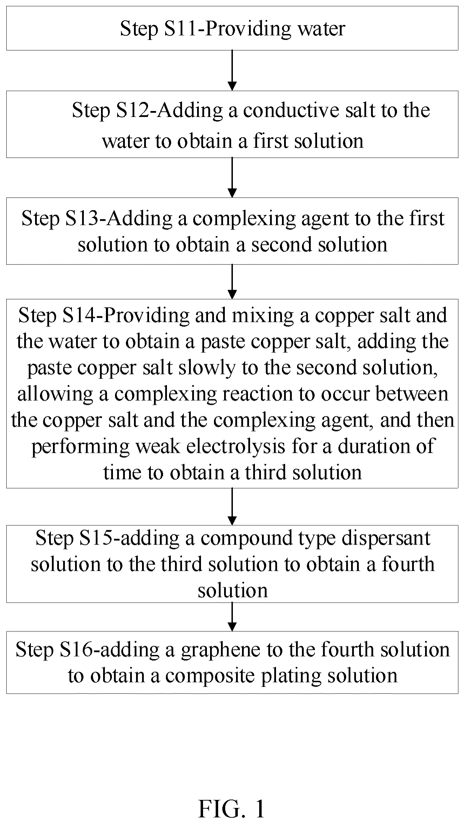

FIG. 1 is a flow chart of a preparation method for a composite plating solution provided in an embodiment of the present application.

### DESCRIPTION OF THE EMBODIMENTS

The technical solutions in the embodiments of the present application will be clearly and completely described below in conjunction with the drawings in the embodiments of the present application. Obviously, the described embodiments are only part of the embodiments of the present application, rather than all of the embodiments. Based on the embodiments in the present application, all other embodiments obtained by those skilled in the art without making creative work belong to the protection scope of the present application. In addition, it should be understood that the specific embodiments described herein are only used to illustrate and explain the present application, and are not used to limit the present application.

In the present application, unless stated to the contrary, a positional word such as "upper" and "lower" generally refer to the upper and lower parts of the device in actual use or working state, specifically the plane direction in the accompanying drawings; while "inner" and "outer" are described with respect to the profile of the device. In addition, in the description of the present application, the term "including" means "including but not limited to". The terms "first, second, third" etc. are used only as labeling, without imposing numerical requirements or establish an order.

In the present application, "and/or" describes the association relationship of the associated objects, indicating that there may be three relationships. For example, A and/or B may encompass: A is present alone, A and B are present at the same time, and B is present alone. A and B may be singular or plural.

In the present application, "at least one" means one or more, and "plurality of" means two or more. "At least one", "at least one of the following" or similar expressions refer to any combination of these items, including any combination of single items or plural items. For example, "at least one of a, b, or c", or "at least one of a, b, and c" may mean: a, b, c, a-b (i.e., a and b), a-c, b-c, or a-b-c, where a, b, and c may be single or multiple.

Various embodiments of the present application may be present in the form of a range; it should be understood that the description in the form of a range is only for convenience and brevity, and should not be understood as a rigid limitation on the scope of the present application; therefore, the range description should be considered to have specifically disclosed all possible sub-ranges and a single numerical value within the range. For example, the range description from 1 to 6 should be considered to have specifically disclosed sub-ranges, such as from 1 to 3, from 1 to 4, from 1 to 5, from 2 to 4, from 2 to 6, from 3 to 6, etc., as well as a single number within the range, such as 1, 2, 3, 4, 5 and 6, which apply regardless of the range. In addition, whenever a numerical range is indicated herein, it is meant to include any cited number (fractional or integer) within the indicated range.

The technical solution of the present application is as follows:
In a first aspect, the embodiments of the present application provide a compound type dispersant, which is mainly used in a metal based-graphene composite plating solution to improve the dispersibility of the graphene in the metal based-graphene composite plating solution. The compound type dispersant includes an alkyl sulfonate and a formaldehyde condensate.

The compound type dispersant described in the present application includes the alkyl sulfonate and the formaldehyde condensate, where the alkyl sulfonate may not only play a dispersing role, but also a wetting role. In this way, when the compound type dispersant is used in a metal based-graphene composite plating solution, the compound type dispersant can effectively wet the graphene and bind the graphene with the dispersant, so that the graphene is evenly dispersed in the plating solution system; the formaldehyde condensate may cooperate with the alkyl sulfonate to not only make the graphene evenly dispersed in the plating solution system, but also make the graphene in the plating solution cooperate with the copper ions to migrate together in proportion (synchronous migration), which is conducive to preparing and obtaining a coating with evenly dispersed metal and graphene.

In the compound type dispersant, a mass ratio of the alkyl sulfonate to the formaldehyde condensate is (0.8~10):1, for example, (0.8~9.5):1, (0.1~8.5):1, (2~6):1, (3~7):1, (4~8):1, (5~9):1, etc. Within the ratio range, when the compound type dispersant is used in the metal based-graphene plating solution, the compound type dispersant has both a high dispersing performance and is conducive to make the graphene in the plating solution cooperate with the copper ions to migrate together in proportion, thereby facilitating preparation of the plating layer in which the metal and the graphene are uniformly dispersed.

The alkyl sulfonate includes, but is not limited to, one or more of sodium dodecyl sulfonate, sodium diheptyl sulfosuccinate, sodium dihexyl sulfosuccinate, sodium methylene naphthalene disulfonate, polystyrene sulfonate, alkyl naphthalene sulfonate and alkyl benzene sulfonate.

In some embodiments, the polystyrene sulfonate includes but is not limited to sodium polystyrene sulfonate.

In some embodiments, the alkylnaphthalene sulfonate includes but is not limited to sodium alkylnaphthalene sulfonate.

In some embodiments, the alkylbenzene sulfonate includes, but is not limited to, one or more of sodium alkylbenzene sulfonate and calcium alkylbenzene sulfonate.

The formaldehyde condensate includes, but is not limited to, one or more of naphthoquinone sulfonate formaldehyde condensate, sodium methylnaphthalene sulfonate formaldehyde condensate, sodium naphthalene sulfonate formaldehyde condensate, sodium cresol sulfonate formaldehyde condensate, formaldehyde condensate of benzaldehyde and polyethylene glycol, melamine-formaldehyde condensate and formaldehyde-2-naphthalene sulfonic acid condensate.

In a second aspect, an embodiment of the present application further provides a compound type dispersant solution, comprising water and the compound type dispersant described above.

In the compound type dispersant solution, a mass concentration of the compound type dispersant is10~20%. Within the concentration range, the compound type dispersant solution may have good wettability and dispersibility, and can more effectively wet and disperse the graphene in the copper-graphene composite plating solution.

The compound type dispersant solution described in the present application includes the compound type dispersant to have strong dispersibility.

In a third aspect, an embodiment of the present application further provides a composite plating solution, which includes a copper salt, a graphene, a conductive salt, a complexing agent, water and the compound dispersant solution described above.

It may be understood that the composite plating solution is a copper-graphene composite plating solution.

The copper salt includes, but is not limited to, cuprous cyanide.

The conductive salt includes, but is not limited to, one or more of potassium hydroxide and sodium hydroxide.

The complexing agent includes, but is not limited to, one or more of potassium cyanide and sodium cyanide.

In the composite plating solution, a concentration of the copper salt is 50~70 g/L, such as 55~65 g/L, 52~60 g/L, 53~62 g/L, 51~68 g/L, 54~66 g/L, 61~69 g/L, etc. Within the concentration range, it is beneficial to prepare a composite plating solution with good graphene dispersion and it is beneficial to prepare a coating with good film-forming properties, so that the coating has good thermal conductivity, electrical conductivity, stability and wear resistance.

In the composite plating solution, a concentration of the graphene is 0.5~5 g/L, for example, 2~10 g/L, 5~12 g/L, 8~13 g/L, 6~14 g/L, 3~11 g/L, etc. Within the concentration range, it is beneficial to prepare a composite plating solution with good graphene dispersibility, and it is beneficial to prepare a coating with good film-forming properties, so that the coating has good thermal conductivity, electrical conductivity, stability and wear resistance.

In the composite plating solution, a concentration of the conductive salt is 10~20 g/L, such as 10~15 g/L, 11~17 g/L, 12~18 g/L, 13~19 g/L, 14~20 g/L, etc. Within the concentration range, it is beneficial to prepare a composite plating solution with good graphene dispersion, and it is beneficial to prepare a coating with good film-forming properties, so that the coating has good thermal conductivity, electrical conductivity, stability and wear resistance.

In the composite plating solution, a concentration of the complexing agent is 100~120 g/L, for example, 100~110 g/L, 105~115 g/L, 110~120 g/L. Within the concentration range, it is beneficial to prepare a composite plating solution with good graphene dispersion, and it is beneficial to prepare a coating with good film-forming properties, so that the coating has good thermal conductivity, electrical conductivity, stability and wear resistance.

In the composite plating solution, a concentration of the compound type dispersant solution is 25~50 g/L, for example, 25~40 g/L, 30~45 g/L, 35~50 g/L and so on. Within the concentration range, the compound type dispersant can effectively wet the graphene, so that the graphene is bound with the dispersant, so that the graphene is evenly dispersed in the plating solution system, which is conducive to preparing a copper-graphene composite plating solution with good graphene dispersion, and is conducive to preparing a coating with good film-forming properties, so that the coating has good thermal conductivity, electrical conductivity, stability and wear resistance.

In some embodiments, the composite plating solution further includes an anode activator.

The anode activator includes, but is not limited to, one or more of potassium sodium tartrate, sodium tartrate and potassium tartrate.

In the composite plating solution, a concentration of the anode activator is 15~30 g/L, for example, 16~25 g/L, 18~22 g/L, 17~28 g/L, 20~29 g/L, 21~27 g/L, etc. Within the concentration range, it is beneficial to prepare a composite plating solution with good dispersibility and it is beneficial to prepare a coating with good film-forming properties, so that the coating has good thermal conductivity, electrical conductivity, stability and wear resistance.

In some embodiments, the composite plating solution further includes an auxiliary additive. The auxiliary additive may make the surface of the coating prepared by the composite plating solution more delicate and smooth.

The auxiliary additive includes but are not limited to potassium thiocyanate.

In the composite plating solution, a concentration of the auxiliary additive is 10~20 g/L, such as 12~18 g/L, 14~16 g/L, 13~17 g/L, 11~19 g/L, 15~20 g/L. Within the concentration range, the surface of the coating prepared by the composite plating solution is more delicate and smooth.

The composite plating solution described in the present application includes the compound type dispersant described above, and the compound type dispersant includes the alkyl sulfonate and the formaldehyde condensate, where the alkyl sulfonate can not only play a dispersing role, but also play a wetting role. In this way, the compound type dispersant can effectively wet the graphene, so that the graphene is bound with the dispersant, thereby making the graphene evenly dispersed in the plating solution system; the formaldehyde condensate in the compound type dispersant may cooperate with the alkyl sulfonate, which can not only make the graphene evenly dispersed in the plating solution system, but also make the graphene in the plating solution cooperate with the copper ions to migrate together in proportion, which is thus conducive to the preparation of a coating with evenly dispersed copper and graphene, so that the coating has good thermal conductivity, electrical conductivity, stability and wear resistance.

In addition, the copper-graphene composite plating solution described in the present application has good dispersibility of graphene in the composite plating solution through the synergistic effect of various components and concentrations. When the composite plating solution is used to prepare the coating, the graphene can be evenly dispersed in the coating, so that the coating has good thermal conductivity, electrical conductivity, stability and wear resistance.

In the fourth aspect, referring to FIG. 1, the present embodiment also provides a preparation method for the composite plating solution, comprising the following steps:
Step S11: providing water;
Step S12: adding a conductive salt to the water to obtain a first solution;
Step S13: adding a complexing agent to the first solution to obtain a second solution;
Step S14: providing and mixing a copper salt and water to obtain a paste copper salt, slowly adding the paste copper salt to the second solution to allow a complex reaction to occur between the copper salt and the complexing agent, and then weakly electrolyzing for a period of time to obtain a third solution;
Step S15: adding a compound type dispersant solution to the third solution to obtain a fourth solution;
Step S16: adding a graphene to the fourth solution to obtain a composite plating solution.

In some embodiments, the preparation method further includes the step of adding an anode activator. It is understood that the anode activator may be added before adding the compound type dispersant solution to the third solution, or added while adding the compound type dispersant solution to the third solution, or added after adding the compound type dispersant solution to the third solution and before adding graphene to the fourth solution, or added while adding graphene to the fourth solution, or added after adding the graphene to the fourth solution and before obtaining the composite plating solution.

In some embodiments, the preparation method further includes the step of adding the auxiliary additive. It is understood that the auxiliary additive may be added before adding the compound type dispersant solution to the third solution, or added while adding the compound type dispersant solution to the third solution, or added after adding the compound type dispersant solution to the third solution and before adding the graphene to the fourth solution, or added while adding the graphene to the fourth solution, or added after adding the graphene to the fourth solution and before obtaining the composite plating solution.

It is understood that the anode activator and the auxiliary additive may be added simultaneously or at different times.

The copper salt, the graphene, the conductive salt, the complexing agent, the anode activator and the auxiliary additive in the preparation method are respectively described above and will not be described in detail here.

The amounts of water, the conductive salt, the complexing agent, the copper salt, the compound type dispersant solution, the graphene, the anode activator and the auxiliary additive used in the preparation method of the composite plating solution are as follows: it is possible to make the conductive salt in the prepared composite plating solution have a concentration of 10~20 g/L, the complexing agent have a concentration of 100~120 g/L, the copper salt have a concentration of 50~70 g/L, the compound type dispersant solution have a concentration of 25~50 g/L, the graphene have a concentration of 0.5~5 g/L, the anode activator have a concentration of 15~30 g/L, and the auxiliary additive have a concentration of 10-20 g/L.

It can be understood that the paste copper salt described in the present application refers to a mixture of copper salt and water in a state between a solid state and a fluid state, with less water content.

Slowly adding the paste copper salt into the second solution includes: slowly adding the paste copper salt into the second solution while stirring the second solution, so that the copper salt and the second solution can undergo a sufficient complexation reaction.

In some embodiments, the duration time of the weak electrolysis is 1 to 2 h, such as 1 h, 1.5 h, 2 h, etc.

After adding the graphene to the fourth solution, the method further comprises: conducting ultrasonication to disperse the graphene sufficiently and evenly.

In some embodiments, the ultrasound frequency is 10~50 KHZ, such as 10 KHZ, 15 KHZ, 20 KHZ, 25 KHZ, 30 KHZ, 35 KHZ, 40 KHZ, 45 KHZ, 50 KHZ, etc., and the ultrasound time is 2~6 h, such as 2 h, 2.5 h, 3 h, 3.5 h, 4 h, 4.5 h, 5 h, 5.5 h, 6 h, etc. Within the frequency and time range of the ultrasound, it is helpful to disperse the graphene sufficiently, quickly and uniformly.

The graphene in the composite plating solution prepared by the preparation method of the composite plating solution described in the present application has good dispersibility. When the composite plating solution is used to prepare the coating, the graphene can be evenly dispersed in the coating, so that the coating has good thermal conductivity, electrical conductivity, stability and wear resistance.

In a fifth aspect, an embodiment of the present application further provides a plated part, at least one surface of the plated part is bonded with a plating layer, and the plating layer is prepared by the composite plating solution described above through the method such as electroplating.

The present application is described in detail below through specific embodiments. The following embodiments are only partial embodiments of the present application and are not limitation to the present application.

### Plating Solution Example 1

### Preparation of the copper-graphene composite plating solution:

A deionized water at a room temperature was prepared;
Potassium hydroxide was added to the deionized water and stirred to fully dissolve it to obtain a first solution;
Potassium cyanide was added to the first solution and stirred to fully dissolve it to obtain a second solution;
The cuprous cyanide was added with water such that it is diluted into a paste, and then slowly added to the second solution, stirred while adding, until the addition is completed so that it is fully complexed with the potassium cyanide in the second solution, and then weakly electrolyzed for 1 hour to obtain a third solution;
Potassium thiocyanate (the auxiliary additive) was added to the third solution, and stirred to fully dissolve it, then the compound type dispersant solution was added, stirred to completely dissolve it to obtain a fourth solution;
Potassium sodium tartrate (the anode activator) was added to the fourth solution, stirred to completely dissolve it, and then the graphene was added, a distilled water was supplemented and stirred, and ultrasonicated at an ultrasonic power of 1200 W for 4 h to obtain a copper-graphene composite plating solution.

### Composition of the copper-graphene composite plating solution:

In the copper-graphene composite plating solution of the present Example, the concentration of potassium hydroxide is 15 g/L, the concentration of potassium cyanide is 110 g/L, the concentration of cuprous cyanide is 60 g/L, the concentration of graphene is 1 g/L, the concentration of potassium thiocyanate is 15 g/L, the concentration of potassium sodium tartrate is 20 g/L, and the concentration of the compound type dispersant solution is 43 g/L.

The compound type dispersant solution comprises sodium dodecyl sulfonate, sodium methylene naphthalene disulfonate and sodium methyl naphthalene sulfonate formaldehyde condensate, where the mass concentration of sodium dodecyl sulfonate is 1%, the mass concentration of sodium methylene naphthalene disulfonate is 7%, and the mass concentration of sodium methyl naphthalene sulfonate formaldehyde condensate is 2%.

### Plating Solution Example 2

The present plating solution Example is basically the same as the plating solution Example 1, except that, in the copper-graphene composite plating solution of the present Plating Solution Example, the concentration of potassium hydroxide is 13 g/L, the concentration of potassium cyanide is 105 g/L, the concentration of cuprous cyanide is 55 g/L, the concentration of graphene is 2 g/L, the concentration of potassium thiocyanate is 13 g/L, the concentration of potassium sodium tartrate is 20 g/L, and the concentration of the compound type dispersant is 40 g/L.

The compound type dispersant solution includes sodium diheptyl sulfosuccinate, sodium methylene naphthalene disulfonate and sodium methyl naphthalene sulfonate formaldehyde condensate, where in the compound type dispersant solution, the concentration of sodium diheptyl sulfosuccinate is 4%, the concentration of sodium methylene naphthalene disulfonate is 3%, and the concentration of sodium methyl naphthalene sulfonate formaldehyde condensate is 8%.

### Plating Solution Example 3

The present Plating Solution Example is substantially the same as the Plating Solution Example 1, except that, in this example, the mass concentration of sodium dodecyl sulfonate is 7%.

### Plating Solution Example 4

The present Plating Solution Example is substantially the same as the Plating Solution Example 1, except that, in this example, the mass concentration of sodium dodecyl sulfonate is 13%.

### Plating Solution Example 5

The present Plating Solution Example is substantially the same as the Plating Solution Example 1, except that, in this example, the mass concentration of sodium methylenenaphthalene disulfonate is 1%.

### Plating Solution Example 6

The present Plating Solution Example is substantially the same as the Plating Solution Example 1, except that, in this example, the mass concentration of sodium methylenenaphthalene disulfonate is 15%.

### Plating Solution Example 7

The present Plating Solution Example is substantially the same as the Plating Solution Example 1, except that, in this example, the mass concentration of sodium methylenenaphthalene disulfonate is 19%.

### Plating Solution Example 8

The present Plating Solution Example is substantially the same as the Plating Solution Example 1, except that, in this example, the mass concentration of the sodium methylnaphthalene sulfonate formaldehyde condensate is 0.8%.

### Plating Solution Example 9

The present Plating Solution Example is substantially the same as the Plating Solution Example 1, except that, in this example, the mass concentration of the sodium methylnaphthalene sulfonate formaldehyde condensate is 10%.

### Plating Solution Example 10

The present Plating Solution Example is substantially the same as Plating Solution Example 1, except that the compound type dispersant solution in this example does not include sodium dodecyl sulfonate.

### Plating Solution Example 11

The present Plating Solution Example is substantially the same as Plating Solution Example 1, except that the compound type dispersant solution in this example does not include sodium methylenenaphthalene disulfonate.

### Plating Solution Example 12

The present Plating Solution Example is substantially the same as the Plating Solution Example 1, except that sodium dihexyl sulfosuccinate is used in this example to replace the sodium dodecyl sulfonate in Example 1.

### Plating Solution Example 13

The present Plating Solution Example is substantially the same as Plating Solution Example 1, except that polystyrene sulfonate is used in this Example to replace the sodium methylenenaphthalene disulfonate in Example 1.

### Plating Solution Example 14

The present Plating Solution Example is substantially the same as Plating Solution Example 1, except that in this example, the sodium cresol sulfonate formaldehyde condensate is used to replace the sodium methylnaphthalene sulfonate formaldehyde condensate in Example 1.

### Plating Solution Example 15

The present Plating Solution Example is basically the same as Plating Solution Example 1, except that the compound type dispersant solution in the present Example further includes melamine-formaldehyde condensate, and in the present Example, the mass concentration of sodium methylnaphthalene sulfonate formaldehyde condensate is 1%, and the mass concentration of melamine-formaldehyde condensate is 1%.

### Plating Solution Comparative Example 1

The components of the copper-graphene composite plating solution of the present Plating Solution Comparative Example are substantially the same as those of the copper-graphene composite plating solution of Plating Solution Example 1, except that the copper-graphene composite plating solution of the present Plating Solution Comparative Example does not contain the compound type dispersant solution of Plating Solution Example 1.

### Plating Solution Comparative Example 2

The components of the copper-graphene composite plating solution of the present Plating Solution Comparative Example are substantially the same as those of the copper-graphene composite plating solution of Plating Solution Example 1, except that the compound dispersant of the copper-graphene composite plating solution of the present Plating Solution Comparative Example does not contain sodium dodecyl sulfonate and sodium methylene naphthalene disulfonate.

### Plating Solution Comparative Example 3

The components of the copper-graphene composite plating solution of the present Plating Solution Comparative Example are substantially the same as those of the copper-graphene composite plating solution of Plating Solution Example 1, except that the copper-graphene composite plating solution of the present Plating Solution Comparative Example does not contain quinone formaldehyde condensate.

### Plated Part Example 1

At least one surface of the plated part of the present Example is provided with a plating layer, and the plating layer is obtained by electroplating the copper-graphene composite plating solution of the present Example on the surface of the plated part.

### Plated Part Examples 2 to 15

The Plated Part Examples 2 to 15 are substantially the same as the Plated Part Example 1, except that the plating layers of the Plated Part Examples 2 to 15 use the copper-graphene composite plating solutions of the Plating Solution Examples 2 to 15.

### Plated Part Comparative Examples 1~3

The plated parts in Comparative Examples 1 to 3 are substantially the same as the Plated Part Example 1, except that the plating layers in the Plated Part Comparative Examples 1~3 use the copper-graphene composite plating solutions in the Plating Solution Comparative Examples 1 to 3.

The coatings of the plated parts of the Plated Part Examples 1 to 15 and the Plated Part Comparative Examples 1 to 3 were subjected to Zeta potential test, abrasion resistance test and hardness test, respectively, obtaining the Zeta potential of the coating, the average sheet diameter of the graphene in the coating, the average number of frictions that the coating can withstand per micron and the hardness. Among them, the Zeta potential test method is an electrophoresis method; the abrasion resistance test is performed by testing the coating with a steel wool abrasion resistance tester; the hardness test is performed with a hardness tester. The test results are shown in Table 1.

**Table 1**

| | Zeta Potential (mV) | Average number of frictions per micron (times) | Hardness (HV) |
|---|---|---|---|
| Plated Part Example 1 | -43.1 | 915.2 | 152 |
| Plated Part Example 2 | -41.3 | 865.6 | 139 |
| Plated Part Example 3 | -40.5 | 852.3 | 145 |
| Plated Part Example 4 | -40.1 | 840.1 | 140 |
| Plated Part Example 5 | -40.6 | 839.2 | 141 |
| Plated Part Example 6 | -40.3 | 853.6 | 146 |
| Plated Part Example 7 | -39.8 | 846.5 | 140 |
| Plated Part Example 8 | -40.2 | 838.0 | 139 |
| Plated Part Example 9 | -40.2 | 845.1 | 139 |
| Plated Part Example 10 | -39.5 | 832.5 | 138 |
| Plated Part Example 11 | -39.6 | 836.4 | 137 |
| Plated Part Example 12 | -40.6 | 846.8 | 140 |
| Plated Part Example 13 | -40.4 | 850.1 | 142 |
| Plated Part Example 14 | -40.1 | 849.2 | 142 |
| Plated Part Example 15 | -40.7 | 853.1 | 146 |
| Plated Part Comparative Example 1 | -39.0 | 713.6 | 135 |
| Plated Part Comparative Example 2 | -39.2 | 725.0 | 136 |
| Plated Part Comparative Example 3 | -39.3 | 730.0 | 136 |

It may be seen from Table 1 that:
Compared with the Zeta potential of the coating of the Plated Comparative Examples 1 to 3, the Zeta potential of the coating of the Plated Part Examples 1 to 15 has higher absolute value. The reason is that the copper-graphene composite plating solution of the Plating Solution Examples 1 to 15 includes the compound type dispersant described in the present application. The compound type dispersant has excellent dispersing properties which can make the graphene fully evenly dispersed in the solution system. When the copper-graphene composite plating solution is used to prepare the coating, the graphene can be more evenly dispersed in the coating, so that the coating has good conductivity.

Compared with the average number of frictions that the coating can withstand per micron of the coatings of Plated Part Comparative Examples 1 to 3, the coatings of the Plated Part Examples 1 to 15 have higher average number of frictions that the coating can withstand per micron, and the wear resistance number is improved by more than 30%. It can be seen that the reason is that the copper-graphene composite plating solution used in the preparation of the coatings of Plated Part Examples 1 to 15 includes the compound type dispersant described in the present application, and the compound type dispersant has excellent dispersing properties, which can make the graphene fully evenly distributed in the solution system. When the copper-graphene composite plating solution is used to prepare the coating, the graphene can be more evenly dispersed in the coating, so that the coating has good wear resistance and stability.

Compared with the hardness of the coating of the Plated Part Comparative Examples 1 to 3, the coating of the Plated Part Examples 1 to 15 has higher hardness. The reason is that the copper-graphene composite plating solution used in the preparation of the coating of the Plated Part Examples 1 to 15 includes the compound type dispersant described in the present application. The compound type dispersant has excellent dispersing properties which can make the graphene fully evenly distributed in the solution system. When the copper-graphene composite plating solution is used to prepare the coating, the graphene can be more evenly dispersed in the coating, so that the coating has good hardness.

The compound type dispersant, the compound type dispersant solution and the composite plating solution provided in the embodiments of the present application have been described in detail above. Specific examples are used herein to illustrate the principles and embodiments of the present application. The description of the above embodiments is only used to help understand the method of the present application and its core idea. Meanwhile, to one skilled in the art, there will be changes in the specific embodiments and the application scope according to the idea of the present application. In summary, the content of the specification should not be understood as a limitation to the present application.

## Claims

1. A compound type dispersant, wherein the compound type dispersant comprises an alkyl sulfonate and a formaldehyde condensate, and a mass ratio of the alkyl sulfonate to the formaldehyde condensate is (0.8~10):1.

2. The compound type dispersant as claimed in claim 1, wherein the alkyl sulfonate comprises one or more of sodium dodecyl sulfonate, sodium diheptyl sulfosuccinate, sodium dihexyl succinate sulfonate, sodium methylene naphthalene disulfonate, polystyrene sulfonate, alkyl naphthalene sulfonate and alkyl benzene sulfonate.

3. The compound type dispersant as claimed in claim 2, wherein,
the polystyrene sulfonate comprises sodium polystyrene sulfonate; and/or
the alkyl naphthalene sulfonate comprises sodium alkyl naphthalene sulfonate; and/or
the alkyl benzene sulfonate comprises one or more of sodium alkyl benzene sulfonate and calcium alkyl benzene sulfonate.

4. The compound type dispersant as claimed in claim 1, wherein the formaldehyde condensate comprises one or more of naphthoquinone sulfonate formaldehyde condensate, sodium methylnaphthalene sulfonate formaldehyde condensate, sodium naphthalene sulfonate formaldehyde condensate, sodium cresol sulfonate formaldehyde condensate, formaldehyde condensate of benzaldehyde and polyethylene glycol, melamine-formaldehyde condensate and formaldehyde-2-naphthalenesulfonic acid condensate.

5. A compound type dispersant solution, wherein the compound type dispersant solution comprises water and a compound type dispersant, the compound type dispersant comprises an alkyl sulfonate and a formaldehyde condensate, and a mass ratio of the alkyl sulfonate to the formaldehyde condensate is (0.8~10):1.

6. The compound type dispersant solution as claimed in claim 5, wherein the alkyl sulfonate comprises one or more of sodium dodecyl sulfonate, sodium diheptyl sulfosuccinate, sodium dihexyl sulfosuccinate, sodium methylene naphthalene disulfonate, polystyrene sulfonate, alkyl naphthalene sulfonate and alkyl benzene sulfonate.

7. The compound dispersant solution as claimed in claim 6, wherein
the polystyrene sulfonate comprises sodium polystyrene sulfonate; and/or
the alkylnaphthalene sulfonate comprises sodium alkylnaphthalene sulfonate; and/or
the alkylbenzene sulfonate comprises one or more of sodium alkylbenzene sulfonate and calcium alkylbenzene sulfonate.

8. The compound dispersant solution as claimed in claim 5, wherein the formaldehyde condensate comprises one or more of naphthoquinone sulfonate formaldehyde condensate, sodium methylnaphthalene sulfonate formaldehyde condensate, sodium naphthalene sulfonate formaldehyde condensate, sodium cresol sulfonate formaldehyde condensate, formaldehyde condensate of benzaldehyde and polyethylene glycol, melamine-formaldehyde condensate and formaldehyde-2-naphthalenesulfonic acid condensate.

9. The compound dispersant solution as claimed in claim 5, wherein a mass concentration of the compound dispersant in the compound type dispersant solution is 10-20%.

10. A composite plating solution, wherein the composite plating solution comprises a copper salt, a graphene, a conductive salt, a complexing agent, water and a compound type dispersant solution, wherein the compound type dispersant comprises an alkyl sulfonate and a formaldehyde condensate, and a mass ratio of the alkyl sulfonate to the formaldehyde condensate is (0.8~10):1.

11. The composite plating solution as claimed in claim 10, wherein the alkyl sulfonate comprises one or more of sodium dodecyl sulfonate, sodium diheptyl sulfosuccinate, sodium dihexyl succinate sulfonate, sodium methylene naphthalene disulfonate, polystyrene sulfonate, alkyl naphthalene sulfonate and alkyl benzene sulfonate.

12. The composite plating solution as claimed in claim 11, wherein
the polystyrene sulfonate comprises sodium polystyrene sulfonate; and/or
the alkyl naphthalene sulfonate comprises sodium alkyl naphthalene sulfonate; and/or
the alkyl benzene sulfonate comprises one or more of sodium alkyl benzene sulfonate and calcium alkyl benzene sulfonate.

13. The composite plating solution as claimed in claim 10, wherein the formaldehyde condensate comprises one or more of naphthoquinone sulfonate formaldehyde condensate, sodium methylnaphthalene sulfonate formaldehyde condensate, sodium naphthalene sulfonate formaldehyde condensate, sodium cresol sulfonate formaldehyde condensate, formaldehyde condensate of benzaldehyde and polyethylene glycol, melamine-formaldehyde condensate and 2-naphthalene-sulfonate acid formaldehyde condensate.

14. The composite plating solution as claimed in claim 10, wherein,
the copper salt comprises cuprous cyanide; and/or
the conductive salt comprises one or more of potassium hydroxide and sodium hydroxide; and/or
the complexing agent comprises one or more of potassium cyanide and sodium cyanide.

15. The composite plating solution as claimed in claim 10, wherein,
a concentration of the copper salt in the composite plating solution is 50~70 g/L; and/or
a concentration of the graphene in the composite plating solution is 0.5~5 g/L; and/or
a concentration of the conductive salt in the composite plating solution is 10~20 g/L; and/or
a concentration of the complexing agent in the composite plating solution is 100~120 g/L; and/or
a concentration of the compound type dispersant solution in the composite plating solution is 25~50 g/L.

16. The composite plating solution as claimed in claim 10, wherein the composite plating solution further comprises an anode activator.

17. The composite plating solution as claimed in claim 16, wherein
the anode activator comprises one or more of potassium sodium tartrate, sodium tartrate and potassium tartrate; and/or
a concentration of the anode activator in the composite plating solution is 15~30 g/L.

18. The composite plating solution as claimed in claim 10, wherein the composite plating solution further comprises an auxiliary additive.

19. The composite plating solution as claimed in claim 18, wherein
the auxiliary additive comprises potassium thiocyanate, and/or
a concentration of the auxiliary additive in the composite plating solution is 10~20 g/L.
